# EUROPEAN PATENT APPLICATION

(11) **EP 1 737 213 A1**
(43) Date of publication of application: **27.12.2006**
(21) Application number: 06114965.4
(22) Date of filing: 05.06.2006
(51) Int. Cl.: H04N 1/401

(54) **Shading Profile Value Correction Method and Image Scanning Device**

(30) Priority: 21.06.2005 KR 2005053305
(71) Applicant: Samsung Electronics Co., Ltd, Suwon-si, Gyeonggi-do 442-742 (KR)
(72) Inventor: Jeon, Cheol-min 1005-1206, Bangjuk-maeul, Suwon-si Gyeonggi-do (KR)
(74) Representative: Perkins, Dawn Elizabeth

(57) **Abstract**

A shading profile value correction method and an image scanning device are disclosed. The shading profile value correction method comprises generating and storing reference shading profile values by scanning a reference white color, regenerating the reference shading profile values, and checking whether difference values between the stored reference shading profile values and the regenerated reference shading profile values are greater than or equal to a predetermined threshold value If a difference value is greater than or equal to the predetermined threshold value, a shading profile value of a specific pixel showing the difference value in question is replaced with a shading profile value of a pixel adjacent to the specific pixel for a subsequent scanning process on an image to be scanned. The method may be used for correcting the vertical black line on the print paper caused by the CIS pixel defects occurring in a progressive manner.

## Description

The present invention relates generally to a shading profile value correction method and image scanning device. More particularly, the present invention relates to a shading profile value correction method and device for reducing pixel defects in a progressive contact image sensor (CIS) and an image scanning device.

Image scanning devices, such as a scanner, are devices which read image information in graphic form represented on sheets of paper, such as pictures or drawings. Such image scanning devices are largely classified into flat bed type scanners and sheet feed type scanners.

The flat bed type scanner, similar to a copier, uses a mechanism in which an image optical sensor moves with respect to a document placed on a flat bed to scan the document. On the other hand, the sheet feed type scanner, similar to a facsimile machine, uses a mechanism in which the image optical sensor is fixed and the document moves with respect to the image optical sensor to scan documents sheet by sheet as they are fed.

The image scanning device of a sheet feed type scanner uses the image optical sensor to read images of the document when the document is inserted between the image optical sensor and a white roller. More particularly, the sheet feed scanner uses an image optical sensor to read a document to be scanned as the document is picked up by a transfer roller and transferred to the white roller. A contact image sensor (CIS), a charge coupled device (CCD), or the like is used for the image optical sensor.

In general, the image scanning device stores a shading profile in memory in order to correct shading distortions occurring during scanning of the document. The shading profile is a reference white value obtained by scanning the white roller or white paper and stored as a factory default at the product adjustment stage in a factory where the image scanning devices are manufactured.

However, in some image scanning device models, such as, an inkjet printer/scanner using the CIS, a laser fax machine and a multi-function peripheral (MFP), an unexpected black line is formed on the paper due to CIS pixel defects during the print job.

Although every product undergoes a test print at the product manufacturing stage and is shipped without any pixel defects, CIS pixel defects can often be observed to appear subsequent to initial product use.

The progressive CIS pixel defects can occur because semiconductor elements of the CIS are influenced by static electricity on the paper transfer path, or due to performance defects in a sensor chip.

The CIS pixel defects usually occur intermittently in a progressive manner after product shipment. Unfortunately, this results in unintended vertical black lines on the paper. These black lines consequently deteriorate the print quality and thus the visible product image to users is also deteriorated.

In short, progressive CIS pixel defects reduce the image quality of the scanned image and, therefore, product reliability is lowered.

Accordingly, it is an object of the present invention to provide a shading profile value correction method for preventing vertical black lines on print paper caused by progressive pixel defects and an image scanning device.

To achieve the above exemplary object and advantage, there is provided a shading profile value correction method according to an exemplary aspect of the present invention, the method comprising generating and storing reference shading profile values by scanning a reference white color, regenerating the reference shading profile values, and checking whether difference values between the stored reference shading profile values and the regenerated reference shading profile values are greater than or equal to a predetermined threshold value. If a difference value is greater than or equal to the predetermined threshold value, a shading profile value of a specific pixel showing the difference value in question is replaced with a shading profile value of a pixel adjacent to the specific pixel for a subsequent scanning process on an image to be scanned.

In an exemplary implementation, the method further comprises storing the regenerated reference shading profile values.

The regenerated reference shading profile values can be stored in a temporal memory.

The reference shading profile values generated by scanning the reference white color can be stored in a flash memory.

The corrected shading profile value of the pixel adjacent to the specific pixel in question can be stored in a temporal memory.

Preferably, the method further comprises printing an image corresponding to the specific pixel in question by applying the shading profile value of the pixel adjacent to the specific pixel in question.

The reference shading profile value may comprise a reference white value obtained by scanning a white paper.

In an exemplary embodiment of the present invention, the reference shading profile values are regenerated upon a user's choice if a black line is produced during a print job.

If the difference value is less than the predetermined threshold value, the method may further comprise printing an image corresponding to the specific pixel by applying the shading profile value of the same pixel. Also, if the difference value is less than the predetermined threshold value, the method may additionally comprise displaying an instruction to clean the CIS (contact image sensor) glass.

In an exemplary embodiment of the present invention, a pixel value of an adjacent pixel can be obtained by adding +1 or -1 to a pixel value of the specific pixel of question.

Another aspect of the present invention provides an image scanning device, which comprises a flash memory for storing reference shading profile values obtained by scanning a reference white color, and a control unit for regenerating the reference shading profile values and checking whether difference values between the stored reference shading profile values and the regenerated reference shading profile values are greater than or equal to a predetermined threshold value. If a difference value is greater than or equal to the predetermined threshold value, a shading profile value of a specific pixel is replaced with a shading profile value of a pixel adjacent to the specific pixel for a subsequent scanning process on an image to be scanned.

The image scanning device may further comprise a temporal memory for storing the regenerated reference shading profile values.

The shading profile value of the pixel adjacent to the specific pixel in question can be stored in the temporal memory as the shading profile value of the specific pixel.

The image scanning device may further comprise a printing unit for printing an image corresponding to the specific pixel by applying the shading profile value of the pixel adjacent to the specific pixel in question.

The reference shading profile value may comprise a reference white value obtained by scanning a white paper.

In an exemplary embodiment of the present invention, the reference shading profile values are regenerated upon a user's choice if a black line is produced during a print job.

The image scanning device may further comprise a printing unit for printing an image corresponding to the specific pixel if the difference value is less than the predetermined threshold value.

The image scanning device may additionally comprise a display unit for displaying an instruction to clean a CIS (contact image sensor) glass if the difference value is less than the predetermined threshold value.

A pixel value of the adjacent pixel can be obtained by adding +1 or -1 to a pixel value of the specific pixel of question.

A multi-function apparatus according to an exemplary embodiment of the present invention comprises any implementation of the above-described image scanning devices.

The above and other aspects and exemplary features of the present invention will be more apparent from the description of certain exemplary embodiments of the present invention with reference to the accompanying drawings, in which:
Figure 1 is a schematic block diagram of a multi-function apparatus having an image scanning device according to an exemplary embodiment of the present invention; and
Figure 2 is a flow chart explaining a shading profile value correction method according an exemplary embodiment of the present invention.

Throughout the drawings, like reference numbers should be understood to refer to like elements, features, and structures.

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope of the claimed invention. Descriptions of well-known functions and constructions are omitted for clarity and conciseness.

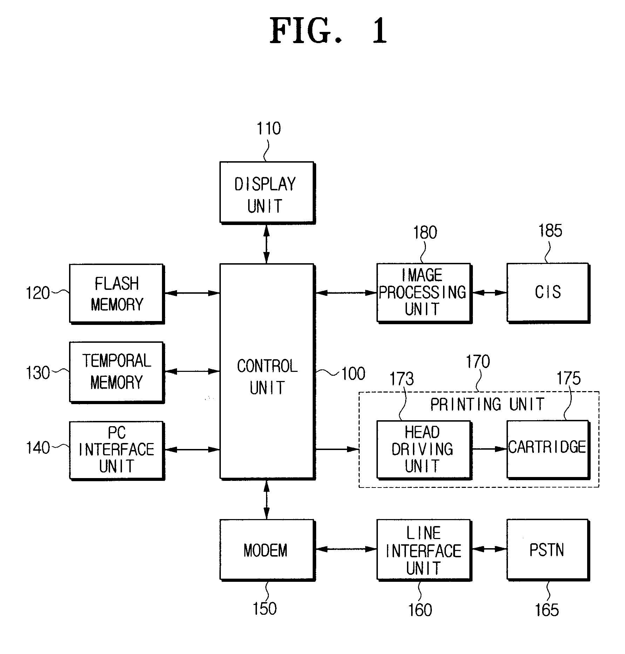

Figure 1 is a schematic block diagram of a multi-function apparatus having an image scanning device according to an exemplary embodiment of the present invention. The multi-function apparatus having the image scanning device according to an exemplary implementation of the present invention may comprise a device with the functions of one of a printer and fax machine in addition to the function of the sheet feed scanner.

Referring to Figure 1, the multi-function apparatus comprises a control unit 100, a display unit 110, a flash memory 120, a temporal memory 130, a personal computer (PC) interface unit 140, a modem 150, a line interface unit 160, a PSTN 165, a printing unit 170, an image processing unit 180, and a contact image sensor (CIS) 185.

The control unit 100 controls overall operations of the apparatus, according to the program stored in the flash memory 120.

The display unit 110 comprises an operation panel such as an LED or LCD, displaying a plurality of operation keys and an operation state. It can also display an error message.

The flash memory 120 stores programs required for operating the image scanning device of the present invention. Some sectors of the flash memory 120 store shading profile values.

The temporal memory 130 temporarily stores data generated during the operation of the image scanning device of the present invention.

The PC interface unit 140 is an interface between the image scanning device and a personal computer. Generally, the PC interface unit 140 is connected to a parallel port of a personal computer.

The modem 150 recognizes and transmits a facsimile signal, such as CNG/CED. The line interface 160 intermediates between the PSTN 165 and the modem 150.

The printing unit 170 comprises a head driving unit 173 and a cartridge 175, wherein the head driving unit 173 drives the cartridge 175. The head driving unit 173 comprises a data transmitting part for transmitting data and a nozzle driving part for driving each nozzle of the cartridge 174 in response to the transmitted data.

The cartridge 175 is a recording element for recording an image on a piece of paper. Under control of the head driving unit 173, the cartridge 175 injects ink directly onto the paper.

The image processing unit 180 converts analog image data read from the CIS 185 and processes an image at the same time.

The CIS 185 is a small-sized assembly element incorporating LEDs for illumination to read (scan) an image through a light receiving sensor.

Operating principle of the multi-function apparatus according to an exemplary embodiment of the present invention is explained below with reference to Fig. 1. At the time of shipment, the flash memory 120 in the multi-function apparatus stores reference shading profile values that are generated by the control unit 100 through analog image data read from the CIS 185 by white paper scanning. These reference shading profile values may be stored in a shading sector of the flash memory 120.

When the multi-function apparatus is used later, CIS pixel defects might occur, resulting in unintended vertical black lines on a print paper. That is, progressive CIS pixel defects cause vertical black lines during copying or transmitting data.

Once a user sees this problem, it is recommended that the user regenerate reference profile values. The user can regenerate reference profile values through white paper scanning, and the generated reference profile values may be stored in the temporal memory 130.

The control unit 100 reads from the temporal memory 130 the reference profile values correspondingly to each pixel, and detects a difference value between the regenerated reference profile values and pre-stored reference profile values in the flash memory 120.

The control unit 100 checks whether the detected difference value is greater than or equal to a predetermined threshold value. If the detected difference value is greater than the predetermined threshold value, the control unit 100 detects a pixel at which the corresponding difference value is generated.

The pixel with the difference value detected by the control unit 100 is a defective pixel that corresponds to a point where a vertical black line is formed. The control unit 100 regards this pixel as a defective pixel. Such a defective pixel continuously may adversely effect print quality as the user subsequently operates the image scanning device.

Therefore, for proper operation of the image scanning device, the control unit does not use a shading profile value at a defective pixel, but uses a shading profile value at another pixel adjacent to the defective pixel, the shading profile values being generated from the image reading process executed by the CIS. For Example, the control unit can control printing at a portion corresponding to the defective pixel to be carried out by applying a shading profile value of another pixel adjacent to the defective pixel, instead of using a shading profile value of the defective pixel itself.

In an exemplary implementation, pixel value of the adjacent pixel is greater or smaller than the pixel value of the defective pixel by 1. For example, for a defective pixel (in the case of 200 dpi, at least one pixel with a pixel value between 1 and 1782 and that the recognized defective pixel has a pixel value of 1024), the control unit 100 always inputs into the temporal memory 130 the shading profile value of a pixel which has a pixel value corresponding to 'the pixel value of the defective pixel ±1' (that is, 1023 or 1025), instead of the shading profile value of the defective pixel itself, and the printing unit 170 executes printing through this. In this manner, the occurrence of a vertical black line due to a defective pixel can be prevented.

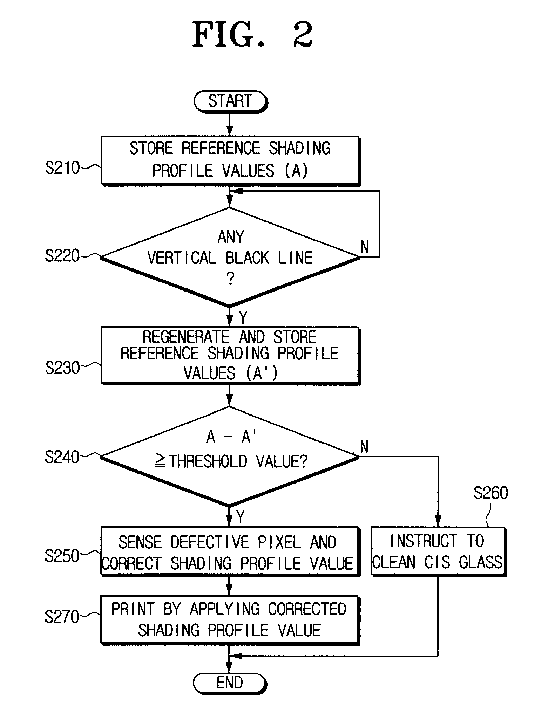

Figure 2 is a flow chart explaining the shading profile value correction method according to an exemplary embodiment of the present invention. Figure 1 and Figure 2 will be referenced below. When a multi-function apparatus having an image scanning device according to an exemplary implementation of the present invention is manufactured, reference shading profile values A that are generated by white scanning and white roller scanning are stored in the flash memory 120, step S210.

In step S220, the user inspects the print quality for the appearance of a vertical black line, if the user sees a vertical black line on a print paper while using the multi-function apparatus, the user regenerates reference shading profile values A' and stores the new reference shading profile values A' in the temporal memory 130, step S230. The user can regenerate reference shading profile values by, for example, following the instructions provided in a user's manual.

The control unit 100 compares the pre-stored reference shading profile values A, from step S210, with the reference shading profile values A', from step S230, and checks if the difference between the values is greater than or equal to a threshold value, step S240.

If the difference between shading profile values at a specific pixel is greater than or equal to the threshold value as determined in step S240, the control unit 100 senses the pixel in question as a defective pixel and replaces the shading profile value of the defective pixel with the shading profile value of an adjacent pixel for correction of the black line, step S250. At this time, the corrected shading profile value is stored in the temporal memory 130.

Therefore, instead of the defective pixel's shading profile value, the shading profile value at the adjacent pixel stored in the temporal memory is used for the printing unit 170 in the multi-function apparatus to execute a print job, step S270.

On the other hand, if the difference between shading profile values at a specific pixel is less than the predetermined threshold value, step S240, the control unit 100 determines that the vertical black line occurred not because of a defective pixel but, for example, because of a problem during the image scanning process. Hence, the control unit 100 displays an instruction, such as, 'Clean the CIS Glass', on the display unit 110, step S260. In this case, the printing unit 170 in the multi-function apparatus executes a print job without the correction of the shading profile value of a pixel.

As explained, certain exemplary implementations of the present invention may be used for correcting the vertical black line on the print paper caused by the CIS pixel defects occurring in a progressive manner.

While the present invention has been particularly shown and described with reference to certain exemplary embodiments thereof, it will be understood by those of ordinary skill in the art that various changes in form and detail can be made therein without departing from the scope of the present invention as defined by the appended claims and equivalents thereof.

## Claims

1. A shading profile value correction method, comprising the steps of:
providing a stored reference shading profile value of a first pixel;
regenerating a reference shading profile value of the first pixel;
determining whether a difference value between the stored reference shading profile value and the regenerated reference shading profile value is greater than or equal to a threshold value; and
if the difference value is greater than or equal to the threshold value, replacing the reference shading profile value of the first pixel with a shading profile value of a second pixel adjacent to the first pixel.

2. A method according to claim 1, further comprising:
storing the regenerated reference shading profile value of the first pixel.

3. A method according to claim 2, wherein the regenerated reference shading profile value of the first pixel is stored in a temporary memory (130).

4. A method according to any one of the preceding claims, wherein the stored reference shading profile value of the first pixel is stored in a flash memory (120).

5. A method according to any one of the preceding claims, wherein the shading profile value of the second pixel is stored in a temporary memory (130).

6. A method according to any one of the preceding claims, further comprising:
printing an image corresponding to the first pixel by applying the shading profile value of the second pixel.

7. A method according to any one of the preceding claims, wherein the step of regenerating the reference shading profile value of the first pixel also comprises generating the shading profile value of the second pixel, by scanning a reference white colour.

8. A method according to any one of the preceding claims, further comprising generating the stored reference shading profile value of the first pixel by scanning a reference white colour.

9. A method according to claims 7 or 8, wherein the reference white colour is a white paper.

10. A method according to any one of the preceding claims, comprising the step of determining whether a black line is produced during printing, and if a black line is produced, carrying out the step of regenerating the reference shading profile of the first pixel.

11. A method according to any one of the preceding claims further comprising, if the difference value is less than the threshold value,
printing an image corresponding to the first pixel by applying the at least one reference shading profile of the first pixel.

12. A method according to any one of the preceding claims further comprising, if the difference value is less than the threshold value, displaying an instruction to clean a contact image sensor (CIS) glass.

13. The method according to any one of the preceding claims, wherein the replacing of the reference shading profile value comprises obtaining a pixel value of the second pixel by adding +1 or -1 to a pixel value of the first pixel.

14. An image scanning device, comprising:
a memory (120) having a reference shading profile value of a first pixel stored thereon; and
a control unit (100) configured to regenerate a reference shading profile value for the first pixel, determine whether a difference value between the stored reference shading profile value and the regenerated reference shading profile value is greater than or equal to a threshold value; and if the difference value is greater than or equal to the threshold value, to replace the reference shading profile value of the first pixel with a shading profile value of a second pixel adjacent to the first pixel.

15. A device according to claim 14, wherein the memory (120) is a flash memory.

16. A device according to claim 14 or 15, further comprising:
a temporary memory (130) for storing the regenerated reference shading profile value of the first pixel.

17. A device according to claim 16, wherein the shading profile value of the second pixel is stored in the temporary memory (130).

18. A device according to any one of claims 14 to 17, further comprising:
a printing unit (170) configured to print an image corresponding to the first pixel by applying the shading profile value of the second pixel.

19. A device according to any one of claims 14 to 18, wherein the reference shading profile value comprises a reference white value obtained by scanning a reference white color.

20. A device according to claim 18 wherein:
the reprinting unit (170) is configured to print an image corresponding to the first pixel, without replacing the reference shading profile of the first pixel with the shading profile of the second pixel, if the difference value is less than the threshold value.

21. A device according to any one of claims 14 to 20, further comprising:
a display unit (110) for displaying an instruction to clean a contact image sensor (CIS) glass if the difference value is less than the threshold value.

22. A device according to any one of claims 14 to 21, wherein the control unit (100) is configured to determine a pixel value of the second pixel by adding +1 or -1 to a pixel value of the first pixel.

23. A multi-function apparatus including the image scanning device of any one of claims 14 to 22.
